# EUROPÄISCHE PATENTANMELDUNG

(11) **EP 0 797 093 A2**
(43) Veröffentlichungstag der Anmeldung: **24.09.1997**
(21) Anmeldenummer: 97103401.2
(22) Anmeldetag: 01.03.1997
(51) Int. Cl.: G01N 27/30

(54) **Redoxelektrode mit einer passiven Oberflächenschicht, Verfahren zu deren Herstellung und Verwendung der Redoxelektrode**

(30) Priorität: 21.03.1996 DE 19611113
(71) Anmelder: M.K. Juchheim GmbH & Co., 36039 Fulda (DE)
(72) Erfinder: Habermann, Wolfgang, Dr., 55122 Mainz (DE)
(74) Vertreter: Zapfe, Hans, Dipl.-Ing.

(57) **Zusammenfassung**

Bei einer Redoxelektrode mit einem Kern aus einem Metall oder einer Legierung aus mindestens zwei Metallen der IV. bis VI. Nebengruppe des Periodischen Systems und einer passiven oxidischen Oberflächenschicht sind zum Zwecke der Analyse von Oxidationsmitteln in Gegenwart von Sauerstoff und/oder von Reduktionsmitteln die Eigenschaften der passiven Oberflächenschicht und der Redoxelektrode so eingestellt, daß
a) die Austauschstromdichten für die Wasserstoffentwicklung in 1n Schwefelsäure bei 20°C 10⁻⁸ bis 10⁻⁷ A/cm² betragen,
b) die mittleren spezifischen Leitwerte von der metallnahen bis zur oberflächennahen Seite um nicht mehr als 2 Zehnerpotenzen differieren,
c) die Redoxpotentiale im sauren Medium negativer als das einer Normalwasserstoffelektrode (NHE) sind, und daß
d) Gehalte an Metallen der VIII. Nebengruppe des Periodischen Systems in der Redoxelektrode weniger als 15 ppm betragen.

## Beschreibung

Die Erfindung betrifft eine Redoxelektrode mit einem Kern aus einem Metall oder einer Legierung aus mindestens zwei Metallen der IV. bis VI. Nebengruppe des Periodischen Systems und einer passiven oxidischen Oberflächenschicht.

Derartige Redoxelektroden dienen bevorzugt zur Bestimmung von Oxidationsmitteln bei Anwesenheit von Sauerstoff in wässrigen Medien.

Zur qualitativen Bestimmung von Oxidationsmitteln wie z.B. Halogenen, Nitrosylverbindungen, Perverbindungen u.a. wurden bisher überwiegend Standard-Platinredoxelektroden, Redoxelektroden aus anderen Platinmetallen oder Gold eingesetzt. Bei diesen angeführten Elektrodenmaterialien zeigte sich, daß der in fast allen Medien befindliche Sauerstoff die Messung stört, wobei sich in Gegenwart weiterer Oxidationsmittel Mischpotentiale einstellten, die eine selektive Erfassung des zu bestimmenden Oxidationsmittels nicht ermöglichen. Hinzu kommt, daß bei gleichzeitiger Anwesenheit von Oxidations- und Reduktionsmitteln an der Elektrodenoberfläche katalytische Prozesse ablaufen, welche die Ausbildung reproduzierbarer Potentiale stören. Außerdem weisen diese Elektrodenmaterialien in einigen oxidationsmittelhaltigen Medien keine ausreichende chemische Beständigkeit auf, so daß es zur Korrosion durch Komplexierung kommt. Weiterhin werden diese Elektrodenmaterialien in Gegenwart von Schwefel und Schwefelverbindungen, die als Inhibitoren wirken, leicht inaktiviert, wodurch die Bestimmung der Oxidationsmittel zeitlich träge oder unmöglich wird.

Zur Verbesserung der Selektivität und Verminderung dieser Probleme wurden oberflächlich Beschichtungen aus teilselektiven Membranen, wie z.B. Teflon- oder Silikonfilmen aufgetragen. Ein Nachteil derartiger Beschichtungen ist die oft geringe Selektivität der Beschichtungen und ihre Anfälligkeit gegenüber Verschmutzungen, wodurch Verzögerungen in der Ansprechgeschwindigkeit neben zusätzlichen Selektivitätsverlusten auftreten.

Die in der britischen Patentschrift 1 101 807 aufgeführten Elektrodenmaterialien aus Wolfram und Molybdän sind zwar weitgehend selektiv gegenüber Halogenen, weisen aber Mängel in der Reproduzierbarkeit, Korrosionsbeständigkeit und Nullpunktstabilität auf.

In der EP 0 305 769 B1 sind Metall/Metalloxid-Elektroden zur Messung salpetriger Säure und Nitrosylverbindungen beschrieben, die aus einem metallischen Leiter bestehen, auf dem sich eine n-leitende Metalloxidoberfläche mit einem Leitwert von 10⁻⁷ bis 10² Ω⁻¹ x cm⁻¹ befindet.

Die EP 0 417 602 B1 beschreibt eine Metall/Metalloxidelektrode zur potentiometrischen und amperometrischen Bestimmung von Chlor in wässrigen sauren Lösungen, die aus einem metallischen Tantalkern besteht, der oberflächlich mit einem porendichten Tantalsuboxid beschichtet ist, wobei die Leitfähigkeit der metallnahen Oxidschicht >1,2 x 10¹ Ω⁻¹ x cm⁻¹ und in der äußeren oberflächennahen Schicht 10⁻⁸ bis 10⁻⁴ Ω⁻¹ x cm⁻¹ beträgt. Schwierig bei der Fertigung der in der EP 0 305 769 B1 und EP 0 417 602 B1 beschriebenen Elektrodenmaterialien ist, daß die Leitfähigkeit der Oxidschicht bezüglich der Reproduzierbarkeit und Korrosionsstabilität als Indikator für ihre Eignung oft nicht ausreichend ist.

Der Erfindung liegt die Aufgabe zugrunde, Redoxelektroden zu schaffen, die die Bestimmung von Oxidationsmitteln in Anwesenheit von Sauerstoff und weiterer Oxidationsmittel sowie von Reduktionsmitteln ermöglichen.

Die Lösung der gestellten Aufgabe erfolgt bei der eingangs angegebenen Redoxelektrode erfindungsgemäß dadurch, daß die Eigenschaften der passiven Oberflächenschicht und der Redoxelektrode so eingestellt sind, daß
a) die Austauschstromdichten für die Wasserstoffentwicklung in 1n Schwefelsäure bei 20°C 10⁻⁸ bis 10⁻⁷ A/cm² betragen,
b) die mittleren spezifischen Leitwerte von der metallnahen bis zur oberflächennahen Seite um nicht mehr als 2 Zehnerpotenzen differieren,
c) die Redoxpotentiale im sauren Medium negativer als das einer Normalwasserstoffelektrode (NHE) sind, und daß
d) Gehalte an Metallen der VIII. Nebengruppe des Periodischen Systems in der Redoxelektrode weniger als 15 ppm betragen.

Weitere vorteilhafte und neue Ausgestaltungen der Erfindung, darunter auch Herstellverfahren und Anwendungen, sind in den Unteransprüchen angegeben.

Die Redoxpotentiale der oberflächlich passivierbaren Metalle oder Metall-Legierungen müssen im sauren Medium als negativer als -0,06 V und positiver als -1,05 V, vorzugsweise negativer als -0,5 V und positiver als -0,95 V als das Potential der Normalwasserstoffelektrode (NHE) sein, um dichte, reproduzierbare Passivschichten in der erforderlichen Qualität zu erhalten.

Für die mittleren spezifischen Leitwerte der Passivschichten, die je nach Oxidationsmittel 10⁰ bis 10⁻⁸ Ω⁻¹ x cm⁻¹ betragen können, sind neben den Verfahrensarten, nach denen die Passivschichten erzeugt werden, die Verunreinigungen im Grundmetall und den Passivschichten wesentlich, wobei insbesondere die Gehalte an Metallen sowie Metalloxiden der VIII-Nebengruppe entscheidend die Eigenschaften der Passivschichten beeinflussen, und daher kleinstmöglich sein sollten.

Die im Meßmedium (Elektrolyten) befindliche Oberfläche der Passivschicht ist in einem Bereich von 0,1 bis 0,5 nm in Abhängigkeit von ihrer Acidität hydratisiert, wobei die gesamte Passivdicke 3 bis 15 nm betragen kann. Der Charakter der hydratisierten Passivschichtoberfläche ist ein maßgebender Faktor bei der Sorption der Oxidationsmittel an bzw. in der Passivschicht. So hat es sich als vorteilhaft erwiesen, zur Bestimmung kationischer Oxidationsmittel, wie z.B. Nitrosylverbindungen, Redoxelektroden mit sauren Passivschichten einzusetzen, während sich für anionische Oxidationsmittel basische Passivschichten bewährt haben.

Mit den oberflächlich passivierten Metallen oder Metall-Legierungen können bei Anwesenheit von Sauerstoff Oxidationsmittel, wie z.B. Wasserstoffperoxid, Peroxoverbindungen, Halogene, Nitrosylverbindungen und freie Radikale des Sauerstoffs, des Wasserstoffperoxids sowie der Peroxoverbindungen bestimmt werden, wenn der spezifische Leitwert der Passivschicht weniger als 10⁰ Ω⁻¹ x cm⁻¹ beträgt. Die Mindestleitwerte der Passivschichten, die erforderlich sind, um die einzelnen Oxidationsmittel zu bestimmen, betragen für Wasserstoffperoxid 10⁰ bis 10⁻¹ Ω⁻¹ x cm⁻¹, für Halogene und Nitrosylverbindungen 10⁻² bis 10⁻⁶ Ω⁻¹ x cm⁻¹, für Ozon, Peroxoverbindungen und freie Radikale des Sauerstoffs, des Wasserstoffperoxids sowie der Peroxoverbindungen 10⁻⁶ bis 10⁻⁸ Ω⁻¹ x cm⁻¹. Hierdurch ist eine Teilselektion der Oxidationsmittel möglich, da Oxidationsmittel, zu deren Bestimmung höhere spezifische Leitwerte erforderlich sind, ausgegrenzt werden können.

Die Passivierung der Metall- und Metall-Legierungsoberflächen erfolgt vorzugsweise durch anodische Oxidation der Metalle bzw. der Metall-Legierungen in halbkonzentrierten, wässrigen Oxosäuren bei Temperaturen von -5 bis +45 °C und Potentiallagen von +0,01 bis 5,0 V gegen die Normalwasserstoffelektrode (NHE). Besonders gut reproduzierbare und stabile Passivschichten erhält man bei Temperaturen von +5 bis +15 °C und Potentiallagen von +0,1 bis +1,5 V. Bei höheren Temperaturen und Potentiallagen als in der Erfindung angegeben, besteht die Gefahr, daß die Passivschichtoberflächen zu stark hydratisiert sind und die spezifischen Leitwerte von der metallnahen bis zur oberflächennahen Seite um mehr als zwei Zehnerpotenzen differieren. Als wässrige Oxosäuren können wässrige Schwefelsäure, Phosphorsäure, Salpetersäure und Perchlorsäure bei der anodischen Oxidation der Metall- oder Metall-Legierungsoberflächen verwendet werden. Besonders bevorzugt ist 40 bis 60 Gew.-%ige wässrige Schwefelsäure. Vor der Erzeugung der Passivschichten auf den Metallen oder Metall-Legierungen werden deren Oberflächen durch lonenätzung mit Edelgasen oder mechanisch mit feinen Schmiergel- und Polierleinen oder durch eine chemische Beizung mit Flußsäure, Phosphorsäure, Flußsäure-Salpetersäure-Gemischen oder Flußsäure-Salpetersäure-Phosphorsäuregemischen von Oxiden und anderen Verunreinigungen befreit.

Nach der ersten anodischen Passivierung wird die Oxidschicht wieder abgetragen und die metallische Oberfläche erneut passiviert. Als besonders günstig hat sich eine dreimalige Passivierung erwiesen. Die passivierten Oberflächen werden anschließend in dem späteren Meßmedium mit dem zu messenden Oxidationsmittel 1 bis 8 Tage durch Alterung konditioniert. Bevorzugt sind Konditionierungszeiten von 3 bis 5 Tagen.

Weiterhin ist es auch möglich, die erste und zweite Passivschicht durch eine chemische Oxidation und die dritte, endgültige Passivschicht durch anodische Oxidation zu erzeugen. Als chemische Oxidationsmittel kommen z.B. Peroxodi-, Peroxomono-Schwefelsäure und Salpetersäure mit 1 bis 15 Gew.-% Wasserstoffperoxid in Betracht. In einigen Fällen, z.B. bei Tantallegierungen und Tantal, können die Passivschichten auch nur durch eine chemische Oxidation erzeugt werden. Als Oxidationsmittel eignet sich Peroxomonoschwefelsäure. Die Oxidation erfolgt bei Temperaturen von 5 bis 15 °C in einem Zeitraum von 5 bis 60 Minuten.

Nach der Passivierung der Metalle und Metall-Legierungen der IV. bis VI. Nebengruppe darf in der Passivschicht der Gehalt an Metallen und Metalloxiden der VIII. Nebengruppe für die Bestimmung von Wasserstoffperoxid maximal 10 bis 15 ppm, Halogenen und Nitrosylverbindungen maximal 2 bis 5 ppm und Ozon, Peroxoverbindungen, freien Radikalen des Sauerstoffs, Wasserstoffperoxids sowie der Peroxoverbindungen weniger als 1 ppm betragen. Im Metall oder der Metall-Legierung, aus und auf dem bzw. in der die Passivschichten erzeugt werden, sollten die Gehalte an Metallen der VIII. Nebengruppe nur 2/5 bis 4/5 der Anteile in der Passivschicht betragen. Weiterhin sollten die Gehalte an Metallen der I. und der VII. Nebengruppe in der Passivschicht unter 15 ppm liegen.

Es können auch Oxidschichten auf Metalle oder Metall-Legierungen aufgetragen werden, bei denen das Metall des metallischen Trägers nicht mit dem Metall der Passivschicht identisch ist. Die Passivschichten werden in diesem Falle durch Aufsputterprozesse oder Abscheidung aus der Dampfphase, CVD-Verfahren, auf dem metallischen Träger aufgetragen.

Am vorteilhaftesten erzeugt man die Passivschichten auf den Metallen oder Metall-Legierungen durch die anodische Oxidation in wässrigen, halbkonzentrierten Oxosäuren, da bei diesem Prozeß n-leitende Passivschichten, durch die auf den Zwischengitterplätzen befindlichen Metallkationen, erhalten werden. Diese so passivierten Metalle oder Metall-Legierungen stellen eine Schottky-Diode dar, bei der der Elektrodentransfer in den Elektrolyten zum Oxidationsmittel bevorzugt ist, womit Störungen durch Reduktionsmittel bei der Bestimmung der Oxidationsmittel minimiert werden. Katalytische Prozesse zwischen dem Oxidations- und Reduktionsmittel werden weitgehend unterbunden.

Als oberflächlich passivierbare Metalle aus der IV. bis VI. Nebengruppe werden bevorzugt Tantal, Niob, Titan sowie Wolfram und als Metall-Legierungen vorzugsweise Tantal-Niob, Titan-Zirkon, Titan-Wolfram, Titan-Molybdän, Titan-Chrom, Wolfram-Zirkon und Wolfram-Moylbdän eingesetzt. Der acide, amphotere oder basische Charakter der Passivschicht ist entscheidend für die Einsatzmöglichkeit bei der Bestimmung der Oxidationsmittel, so eignen sich z. B. vorzugsweise für anionische Oxidationsmittel Titan und Titan-Zirkon-Legierungen, für undissozierte Oxidantien Tantal, Tantal-Niob-, Titan-Chrom-Legierungen und kationische Oxidationsmittel Wolfram-Molybän- und Titan-Wolframlegierungen.

Zur Bestimmung der Oxidationsmittelkonzentration werden die passivierten Metalle und Metall-Legierungen in Gläser oder Keramik mit metallidentischen Ausdehnungskoeffizienten gefaßt, wobei der Meßelektrodenteil und eine Kontaktstelle frei bleiben. Beim Einschmelzprozeß, der unter Inertgas erfolgt, muß darauf geachtet werden, daß der Verbund im Bereich Metall/Glas porenfrei bleibt und der freie Redoxelektrodenteil, der zur Messung dient, nicht durch Getterung von Sauerstoff oder Wasserstoff durch die Bildung neuer Oxide oder Hydride verunreinigt wird. Es hat sich als vorteilhaft erwiesen, die Passivierung erst nach dem Einschmelzprozeß vorzunehmen.

Als Meßmethode zur Bestimmung der Oxidationsmittel mit den Redoxelektroden aus passivierten Metallen und Metall-Legierungen eignet sich u.a. die Potentiometrie mit aufgeprägtem Strom. Bei dieser Meßmethode wird die Redoxelektrode mit Hilfe einer Spannungsquelle über einen hochohmigen Widerstand (> 1 M Ω) gegen eine Hilfselektrode aus einem Platinmetall polarisiert, so daß bei Abwesenheit des zu messenden Oxidationsmittels das Potential der Redoxelektrode 5 bis 50 mV über dem pH-abhängigen Potential der Wasserstoffelektrode liegt. Das eigentliche Meßsignal stellt sich bei dieser Meßmethode in Gegenwart des zu messenden Oxidationsmittels ein und wird gegen eine Referenzelektrode hochohmig gemessen. Als Referenzelektroden werden Silber/Silberchlorid-, Thalamid bzw. Quecksilber/Quecksilberchlorid-Elektroden verwendet. Diese Meßmethode ist gegenüber anderen Meßtechniken besonders bevorzugt.

Neben der Verwendung in der Potentiometrie können die erfindungsgemäßen Redoxelektroden auch bei amperometrischen Meßmethoden verwendet werden. Bei dieser Messung wird das Meßsignal in Abhängigkeit von der Oxidationsmittelkonzentration gegen eine Elektrode mit konstantem Potential ermittelt.

Zur Oxidationsmittelbestimmung werden die Redoxelektroden aus oberflächlich passivierten Metallen und Metall-Legierungen bei Temperaturen zwischen 0 und 50 °C, vorzugsweise 15 bis 30 °C, eingesetzt.

Die erfindungsgemäßen Redoxelektroden aus oberflächlich passivierten Metallen oder Metall-Legierungen eignen sich zur Messung von Oxidationsmitteln, insbesondere im Spurenbereich, in Prozeß- und Abwässern, in Lebensmitteln, im Trinkwasser und eröffnen neue Möglichkeiten bei der Bestimmung freier Radikale in der Medizin sowie bei biochemischen Reaktionen. Besondere Vorteile der Erfindung, im Vergleich zum Stand der Technik, bestehen darin, daß Redoxelektroden mit einer hohen Selektivität und Reproduzierbarkeit bei guter Ansprechgeschwindigkeit, Nullpunktstabilität und Korrosionsbeständigkeit mit den in den Patentansprüchen beschriebenen Maßnahmen erhalten werden.

### Beispiel 1

Ein Tantalstift von 1,5 mm Durchmesser und 16 mm Länge, bestehend aus 99,97 Gew.-% Tantal und ca. 0,03 Gew.-% Niob mit einem Gehalt von 4 ppm Eisen, dessen Austauschstromdichte für die Wasserstoffentwicklung in 1n Schwefelsäure bei ca. 10⁻⁷ A/cm² liegt, wobei das Redoxpotential im oxidationsmittelfreien, sauren Elektrolyten ca. -0,81 V beträgt, wird auf einer Seite in ein Glasrohr mit einem dem Tantal identischen Ausdehnungskoeffizienten eingeschmolzen, so daß eine freie Stifflänge von 8 mm verbleibt. Der im Glasrohr eingeschmolzene Teil des Tantalstiftes wird mit Silberwolle und einer Platinableitungselektrode kontaktiert. Die freie Oberfläche des Tantalstiftes wird zunächst mit Trichlormethan von organischen Verunreinigungen befreit und anschließend mit Aceton und destilliertem Wasser gereinigt. Anschließend wird die Oxidoberfläche mit feinem Schmirgelpapier und Polierleinen von Oxiden befreit und, wie vorangehend beschrieben, wieder gereinigt. Nach dieser Prozedur wird der Tantalstift in 50 Gew.-%iger, wässriger Schwefelsäure von +12 °C 45 Minuten anodisch bei einem Potential von +1,1 V, bezogen auf die Normalwasserstoffelektrode (NHE), polarisiert. Nach dieser ersten Passivierung wird die Oxidschicht wieder, wie vorangehend beschrieben, entfernt, wobei die gesamte Prozedur der Passivierung insgesamt dreimal wiederholt wird. Anschließend wird der Tantalstift 4 Tage in 10 Gew.-%iger NaCl-Lösung, die ca. 1200 ppm Chlor enthält, durch Alterung konditioniert.

Untersuchungen der Passivschicht zeigten, daß der Leitwert der metallnahen Oxidschicht ca. 10⁻³ Ω⁻¹ x cm⁻¹ und der oberflächennahen Oxidschicht
10⁻⁵ Ω⁻¹ x cm⁻¹ beträgt.

Die Redoxelektrode kann zur Messung von Chlor in sauren Elektrolyten eingesetzt werden. Bei potentiometrischen Messungen mit aufgeprägtem Strom sind Meßbereiche von 0,1 bis 2000 ppm ohne zusätzliche Verdünnungs- oder Aufkonzentrierungsmaßnahmen möglich. Sauerstoff und nicht aktiviertes Wasserstoffperoxid stören die Chlorbestimmung nicht. Die Elektrode kann über mindestens 12 Monate in salzsauren Medien zur Chlorbestimmung bei Raumtemperatur eingesetzt werden, wobei die konzentrationsabhängigen Potentialwerte keine Hysteresis zeigen. Die Ansprechzeit beträgt für den 85 %-Wert des Potentials bei Konzentrationsänderungen weniger als 20 Sekunden.

Erfolgt die Passivierung bei Temperaturen von > +45 °C und Potentiallagen, die +5 V positiver als das Potential der Normalwasserstoffelektrode (NHE) sind, dann werden Passivschichten erhalten, bei denen die Leitwerte zwischen der oberflächennahen und metallnahen Seite der Passivschicht um mehr als 5 Zehnerpotenzen differieren. Eine derartige Elektrode liefert keine reproduzierbaren konzentrationsabhängigen Potentiale, wobei durch die extreme Hydratisierung der Passivschichtoberfläche und die ständig sinkenden Leitwerte schließlich keine Potentialeinstellung mehr möglich ist.

Enthält das zu passivierende Tantalmaterial mehr als 10 ppm Eisen, so erhält man Passivschichten, welche die Aktivierung des Wasserstoffperoxids begünstigen, so daß eine Selektion des Chlors vom Wasserstoffperoxid nicht mehr gelingt. Aus diesem Grunde ist auch eine mehrfache Passivierung und Abtragung der Passivschicht vor der endgültigen Passivierung erforderlich, um oberflächliche Verunreinigungen durch Metalle der VIII. Nebengruppe, insbesondere Eisen, weitgehend zu eliminieren.

### Beispiel 2

Ein Metallstift mit den Abmessungen und einer Glaseinfassung wie in Beispiel 1, bestehend aus einer Metall-Legierung, die 80 Gew.-% Tantal, 20 Gew.-% Niob, 0,8 ppm Eisen und 0,1 ppm Nickel enthält, deren Austauschstromdichte für die Wasserstoffentwicklung in 1n Schwefelsäure ca. 10⁻⁷ A/cm⁻¹ beträgt und deren Redoxpotential im oxidationsmittelfreien sauren Elektrolyten bei ca. -0,79 V liegt, wird wie in Beispiel 1 passiviert. Nach der letzten Passivierung konditioniert man die passivierte Metall-Legierung 4 Tage in wässriger 55 Gew.-%iger Perioxodischwefelsäure. Nach dieser Vorbehandlung beträgt der Leitwert in der metallnahen Oxidschicht 10⁻⁵ Ω⁻¹ x cm⁻¹ und in der oberflächennahen Oxidschicht ca. 10⁻⁷ Ω⁻¹ x cm⁻¹.

Die Elektrode kann zum Nachweis von freien Radikalen, z.B. bei der Aktivierung von Wasserstoffperoxid durch UV-Licht, von freien Radikalen im Blut und bei Untersuchungen von Reaktionen der freien Radikale z.B. auf Antioxidantien eingesetzt werden. Sauerstoff oder nicht aktivierte Perverbindungen stören die Messung nicht. Diese Redoxelektrode zeichnet sich durch eine gute Langzeitstabilität aus, wenn die Oberfläche nicht durch freie Eisenione verunreinigt wird. Abhilfe bei Anwesenheit von Eisenionen bringt der Zusatz von Komplexbildnern zum Meßmedium. Besonders wichtig für diese Messungen ist, daß der Gesamtgehalt an Metallen der VIII. Nebengruppe in der Passivschicht weniger als 1 ppm beträgt. Die Ansprechzeit für den 85 %-Wert des Potentials bei Konzentrationssprüngen des Oxidationsmittels beträgt weniger als 15 Sekunden.

### Beispiel 3

Wie in Beispiel 1 werden je ein Metallstift aus einer Titan-Zirkon-Legierung mit 75 Gew.-% Titan, 25 Gew.-% Zirkon, 4 ppm Eisen und 0,5 ppm Nickel und aus einer Wolfram-Titan-Legierung mit 80 Gew.-% Wolfram, 20 Gew.-% Titan und 5 ppm Eisen in Glas gefaßt und anodisch passiviert. Die Austauschstromdichten für die Wasserstoffentwicklung in 1n Schwefelsäure betragen bei der Titan-Zirkon-Legierung ca. 10⁻⁸ A/cm² und bei der Wolfram-Titan-Legierung ca. 10⁻⁷ A/cm². die Alterung der Titan-Zirkon-Legierung erfolgt 3 Tage in einer wässrigen, alkalischen Natriumhypochlorit-Lösung vom pH-Wert 12 mit ca. 1 Gew.-% freiem Chlor, während die Wolfram-Titan-Legierung in wässriger 1n Salpetersäure mit 500 ppm salpetriger Säure 4 Tage konditioniert wird. Die Redoxpotentiale der Metall-Legierungen und die Leitwerte in den Passivschichten sind in der nachfolgenden Tabelle dargestellt:

| Legierung | Leitwert der metallnahen Oxidschicht | Leitwert der oberflächennahen Oxidschicht | Redoxpotential |
|---|---|---|---|
| Titan-Zirkon | 10⁻⁴ Ω⁻¹ x cm¹ | 10⁻⁵ Ω⁻¹ x cm⁻¹ | ca. -0,6 V |
| Wolfram-Titan | 10⁻² Ω⁻¹ x cm¹ | 10⁻⁴ Ω⁻¹ x cm⁻¹ | ca. -0,9 V. |

Die Titan-Zirkon-Legierung eignet sich bevorzugt zur Messung von Hypochlorit in alkalischen Medien. Es können Meßbereiche von 0,5 bis 3000 ppm ohne Verdünnungs- und Aufkonzentrierungsmaßnahmen erfaßt werden. Sauerstoff stört die Messung nicht. Die Ansprechzeit für den 85 %-Wert des Potentials beträgt bei Konzentrationssprüngen weniger als 25 Sekunden.

Passivierte Metalle oder Metall-Legierungen der oder aus Metallen der V. und VI. Nebengruppe sind zur Hypochloritmessung nicht geeignet.

Mit der Wolfram-Titan-Legierung können salpetrige Säure oder Nitrit über die protonierten Folgeprodukte wie das Nitrosylkation bestimmt werden. Es sind ohne zusätzliche Maßnahmen Meßbereiche von 0,5 bis 3000 ppm möglich. Sauerstoff stört die Messung nicht. Die Ansprechzeit, bei Konzentrationssprüngen, beträgt für den 85 %-Wert des sich einstellenden Potentials weniger als 22 Sekunden.

Passiviert man die Metall-Legierungen oberhalb der bevorzugten Potential- und Temperaturbereiche, erhält man Passivschichten, die schwierig zu konditionieren sind, wobei zusätzlich Hysteresen bei der Einstellung der konzentrationsabhängigen Redoxpotentiale auftreten können.

## Patentansprüche

1. Redoxelektrode mit einem Kern aus einem Metall oder einer Legierung aus mindestens zwei Metallen der IV. bis VI. Nebengruppe des Periodischen Systems und einer passiven oxidischen Oberflächenschicht, **dadurch gekennzeichnet**, daß die Eigenschaften der passiven Oberflächenschicht und der Redoxelektrode so eingestellt sind, daß
a) die Austauschstromdichten für die Wasserstoffentwicklung in 1n Schwefelsäure bei 20°C 10⁻⁸ bis 10⁻⁷ A/cm² betragen,
b) die mittleren spezifischen Leitwerte von der metallnahen bis zur oberflächennahen Seite um nicht mehr als 2 Zehnerpotenzen differieren,
c) die Redoxpotentiale im sauren Medium negativer als das einer Normalwasserstoffelektrode (NHE) sind, und daß
d) Gehalte an Metallen der VIII. Nebengruppe des Periodischen Systems in der Redoxelektrode weniger als 15 ppm betragen.

2. Redoxelektrode nach Anspruch 1, **dadurch gekennzeichnet**, daß die Redoxpotentiale im sauren Medium zwischen -0,06 V und -1,05 V gegenüber der Normalwasserstoffelektrode (NHE) betragen.

3. Redoxelektrode nach Anspruch 1, **dadurch gekennzeichnet**, daß die Gehalte an Metallen der VIII. Nebengruppe des Periodischen Systems in der passiven Oberflächenschicht verwendungsbezogen folgende obere Grenzwerte aufweisen:
| | |
|---|---|
| für Wasserstoffperoxid: | 10 bis 15 ppm |
| für Halogene und Nitrosylverbindungen | 2 bis 5 ppm |
| für Ozon, Peroxoverbindungen, freie Radikale des Sauerstoffs, des Wasserstoffperoxids und der Peroxoverbindungen: | 1 ppm. |

4. Redoxelektrode nach Anspruch 3, **dadurch gekennzeichnet**, daß die Gehalte an Metallen der VIII. Nebengruppe des Periodischen Systems im Kern maximal 80 Gew.-%, vorzugsweise maximal 40 Gew.-%, der im Anspruch 3 angegebenen oberen Grenzwerte betragen.

5. Redoxelektrode nach Anspruch 1, **dadurch gekennzeichnet**, daß der mittlere spezifische Leitwert der passiven Oberflächenschicht verwendungsbezogen zwischen 10⁰ und 10⁻⁸ Ω⁻¹ x cm⁻¹ beträgt.

6. Redoxelektrode nach Anspruch 3, **dadurch gekennzeichnet**, daß der mittlere spezifische Leitwert der passiven Oberflächenschicht zu Selektionszwecken von Oxidationsmitteln verwendungsbezogen in Ω⁻¹ x cm⁻¹ wie folgt gewählt wird (Oxidationsmittel):
| | |
|---|---|
| Wasserstoffperoxid: | 10⁰ bis 10⁻¹ |
| Halogene und Nitrosylverbindungen: | 10⁻¹ bis 10⁻⁶ |
| Ozon, Peroxoverbindungen und freie Radikale | 10⁻⁶ bis 10⁻⁸. |

7. Redoxelektrode nach Anspruch 1, **dadurch gekennzeichnet**, daß die Dicke der passiven Oberflächenschicht zwischen 3 und 15 nm beträgt.

8. Redoxelektrode nach Anspruch 1, **dadurch gekennzeichnet**, daß die passive Oberflächenschicht auf einem Teil ihrer Dicke hydratisiert ist.

9. Redoxelektrode nach Anspruch 8, **dadurch gekennzeichnet**, daß die passive Oberflächenschicht, ausgehend von der Außenseite her, in einer Tiefe von 0,1 bis 0,5 nm hydratisiert ist.

10. Redoxelektrode nach Anspruch 1, **dadurch gekennzeichnet**, daß der Kern aus einem Metall aus der Gruppe Tantal, Niob, Titan und Wolfram oder aus einer Legierung aus der Gruppe Tantal-Niob, Titan-Zirkonium, Titan-Wolfram, Titan-Molybdän, Titan-Chrom, Wolfram-Zirkonium und Wolfram-Molybdän besteht.

11. Redoxelektrode nach Anspruch 1, **dadurch gekennzeichnet**, daß die passive Oberflächenschicht aus einem aufgetragenen Oxid besteht, dessen metallische Komponente vom Kernwerkstoff verschieden ist.

12. Redoxelektrode nach Anspruch 1, **dadurch gekennzeichnet**, daß sie als Schottky-Diode ausgebildet ist, bei der der Kern von einer n-leitenden Oxidschicht überzogen ist, so daß der Elektronentransfer in Richtung des Meßmediums bevorzugt ist.

13. Redoxelektrode nach Anspruch 1, **dadurch gekennzeichnet**, daß zur Analyse kationischer Oxidationsmittel passive Oberflächenschichten aus der Gruppe an der Oberfläche hydratisierter und saurer Oxidschichten vorhanden sind.

14. Redoxelektrode nach Anspruch 1, **dadurch gekennzeichnet**, daß zur Analyse anionischer Oxidationsmittel passive Oberflächenschichten aus der Gruppe amphoterer und basischer Oberflächenschichten vorhanden sind.

15. Verfahren zum Herstellen einer Redoxelektrode nach Anspruch 1, **dadurch gekennzeichnet**, daß ein Kern mit weniger als 15 ppm an Gehalten an Metallen der VIII. Nebengruppe des Periodischen Systems verwendet wird und daß die passive Oberflächenschicht durch anodische Oxidation dieses Kerns in einer wässrigen Oxosäure bei Temperaturen von -5 °C bis +45 °C, vorzugsweise von +5 °C bis +15 °C, und bei Potentiallagen erzeugt wird, die um +0,01 V bis +5,0 V, vorzugsweise von +0,1 bis +1,5 V, positiver als das Potential der Normalwasserstoffelektrode (NHE) sind.

16. Verfahren nach Anspruch 15, **dadurch gekennzeichnet**, daß nacheinander mindestens drei passive Oberflächenschichten erzeugt werden und daß die ersten passiven Oberflächenschichten wieder vom Kern entfernt werden, bevor die endgültige passive Oberflächenschicht erzeugt wird und daß die endgültige passive Oberflächenschicht mindestens einen Tag, vorzugsweise mindestens drei Tage, in einem der späteren Meßmedien gealtert wird.

17. Verfahren nach Anspruch 16, **dadurch gekennzeichnet**, daß die ersten passiven Oberflächenschichten durch chemische Oxidation und die letzte, verbleibende, passive Oberflächenschicht durch anodische Oxidation erzeugt wird.

18. Verfahren nach Anspruch 17, **dadurch gekennzeichnet**, daß die Oxidationsvorgänge durch eine Oxosäure bei Temperaturen zwischen 5 °C und 15 °C in einer Zeitspanne von 5 bis 60 Minuten durchgeführt wird.

19. Verfahren nach Anspruch 15, **dadurch gekennzeichnet**, daß der Kern mit einer Teillänge in ein gegen die Oxidationsmittel beständiges Rohr eingebettet wird, und daß die Passivierung der freiliegenden Länge des Kerns nach dem Einschmelzen durchgeführt wird.

20. Verwendung einer Redoxelektrode nach mindestens einem der Ansprüche 1 bis 14 für potentiometrische Messungen.

21. Verwendung einer Redoxelektrode nach mindestens einem der Ansprüche 1 bis 14 für die Analyse von Oxidationsmitteln aus der Gruppe Wasserstoffperoxid, Peroxoverbindungen, Halogenen, Nitrosylverbindungen Ozon und freien Radikalen in Anwesenheit von Sauerstoff, je nach dem spezifischen Leitwert der passiven Oberflächenschicht und der Oxidationsmittel.
